# EUROPEAN PATENT SPECIFICATION

(11) **EP 3 408 131 B1**
(45) Date of publication and mention of the grant of the patent: **25.12.2019**
(21) Application number: 17702042.7
(22) Date of filing: 24.01.2017
(51) Int. Cl.: B60L 53/36

(54) **SUPPLY OF ELECTRIC ENERGY TO A ELECTRICALLY DRIVEN VESSEL**
VERSORGUNG VON ELEKTRISCHER ENERGIE FÜR EIN ELEKTRISCH ANGETRIEBENES SCHIFF
ALIMENTATION EN ÉNERGIE ÉLECTRIQUE À UN BATEAU À COMMANDE ÉLECTRIQUE

(30) Priority: 25.01.2016 FI 20165044
(43) Date of publication of application: 05.12.2018
(73) Proprietor: ABB Schweiz AG, 5400 Baden (CH)
(72) Inventor: POHJANHEIMO, Pasi, 00980 Helsinki (FI)
(74) Representative: Kinnunen, Kari Tapio
(86) International application number: PCT/EP2017/051444
(87) International publication number: WO 2017/129572

(56) References cited:
- EP-A1- 2 639 151
- WO-A1-03/087501
- DE-A1-102012 217 710
- FR-A1- 2 781 755
- FR-A1- 2 877 509

## Description

### FIELD

The present invention relates to powering of a vessel such as a road and commuter ferry.

### BACKGROUND

Interest in utilizing energy storage technology onboard road and commuter ferries is rapidly increasing. Feasible battery solutions range from primary source of energy to peak load shaving and backup purposes. Fast charging during turnarounds is a vital part of battery operation, especially when used for powering the main propulsion.

Standardized solutions for shore connection are typically based on flexible, portable cables and plugs that are manually connected to the inlet onboard the vessel. As the connection procedure takes time, these are intended and more suitable for longer turnaround periods. Also the power ratings of such solutions are rather small.

Road ferries sail non-stop between the shore stations, at least during the high traffic hours. The vessel is docked only during unloading and loading of the cars. Time allowing the charging of batteries from ashore is very limited. Use of cabling and manually inserted plug(s) would be requiring too much time, reducing the amount of energy that can be transferred during the turnaround time. In addition the required amperage is high, which in turn leads to large and heavy bundles of cables. Availability of flexible cables in high cross section is limited. Also the cable handling becomes complicated and time consuming due to the weight and cable dimensions.

### SUMMARY

An object of the present invention is to provide an apparatus and a method which are defined in the independent claims. Some embodiments are disclosed in the dependent claims.

### DRAWINGS

In the following, the invention will be described in greater detail by means of some embodiments with reference to the accompanying drawings, in which
Figure 1 shows an embodiment of a road commuter ferry as a side view approaching the pier;
Figure 2 shows the ferry of Figure 1 when docked to the pier;
Figure 3 shows the mechanical and electric coupling of the ferry in more detail;
Figure 4 shows the mechanical and electric coupling in top view;
Figure 5 shows a more detailed view of the electric coupling;
Figure 6 shows an embodiment of an electric connection between the pier and the vessel.
Figure 7 shows another embodiment of an electric connection between the pier and the vessel.
Figure 8 shows another embodiment of an electric connection between the pier and the vessel.
Figure 9 shows an embodiment of a method.

### DETAILED DESCRIPTION

The embodiments relate to vessels. The embodiments highlight the invention with reference to road commuter ferries, but the inventive concept is applicable also to other seagoing vessels. The embodiments relate to vessels equipped with mechanical docking members for mechanical docking of the vessel to the pier. The mechanical docking members of the vessel and the pier are such that they mechanically engage each other when the vessel approaches the pier. In the embodiments, there may be provided a protrusion, either horizontal or vertical in one of the vessel or the pier, which is received by a receptacle or a space in the other one.

In one embodiment, the mechanical docking members comprise horns, which may be rigid pins or cone tipped beams that are inserted to a receptacle in the pier to align the vessel/ferry mechanically with a loading ramp.

In another embodiment, there may be a vertical protrusion in the pier to be received in receptacle in the vessel. Other mechanical connecting members between the vessel and pier are also applicable. In the embodiments, however, there is a protrusion in one of the vessel and pier and a receptacle in the other member of the docking arrangement which automatically co-operate to complete the docking when the vessel is driven to the pier. Other than that, the embodiments are not limited to how the mechanical docking members are implemented.

In addition to mechanical docking arrangement, there may also be provided a locking arrangement for ensuring that the docking is not released. There are various alternatives for implementing the locking. In one embodiment, there may be provided a protrusion/pin in one of the vessel or the pier, which moves to a recess or behind a wall in the other such that the vessel cannot escape the pier.

In the embodiments, there are also provided electric connecting members that connect the vessel electrically to the shore for receiving electric energy from the shore to the vessel while the vessel is docked to the shore. In the embodiments, the electric contacts are positioned such that the electric contacts of the vessel and the pier are brought into alignment during mechanical docking of the vessel. The electric contacts may thus be vertically and horizontally facing each other.

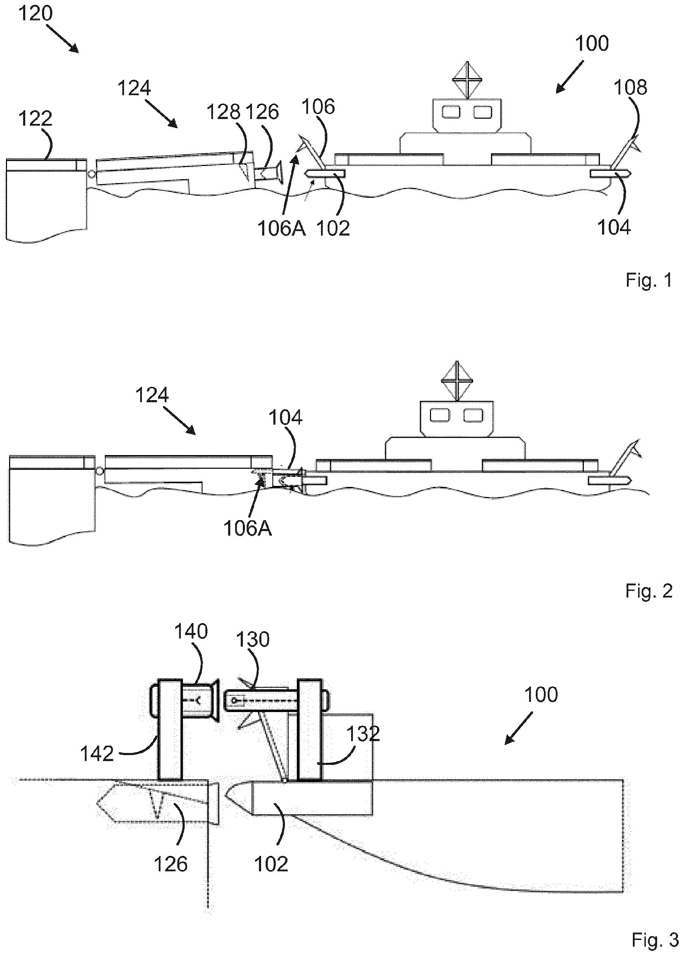

Figure 1 highlights one embodiment of mechanical docking members of a road commuter ferry 100 and the pier 120 when the ferry is approaching the pier. The ferry has docking horns 102, 104 in both ends of the ferry for mechanical docking of the ferry to docking receptacles of the pier. The pier 120 may have a solid pier section 122 and a floating pier section 124 connected to each other such that the floating pier section 124 can follow the movements of the ferry 100 when docked to each other.

In addition to the docking horns such as the horn 102, the ferry also comprises pivotable loading ramps 106, 108 that can be pivoted against the respective floating pier section when the ferry 100 is docked thereto for loading and unloading of ferry 100. The loading ramp 106 may also have locking members such as a claw 106A or similar grabbing element for temporary locking/attaching of the ferry to the pier. Thereby the claw prevents the ferry to escape from contact with the floating pier section when being docked. Alternatively, the ferry may be kept stationary by using the propulsion motors pushing the ferry against the pier section.

The pier is provided with respective mechanical docking members for cooperating with the docking members of the ferry when docking the ferry to the pier. That is, there may be provided a recess/receptacle 126 for receiving the docking horn 102. Furthermore, there may be provided a recess/receptacle 128 to which the claw 106A of the ramp sets when the ferry is docked to the pier. Alternatively, there may be provided a wall section behind which the claw sets when the ramp has been pivoted to horizontal position.

Although Figure 1 shows the ferry 100 having mechanical connecting/docking members in both ends of the vessel, this is not necessary but the vessel may have mechanical connecting members in one end of the vessel only. Furthermore, although Figure 1 shows a floating pier section 124, alternatively the pier section may be a ramp hinged to the solid pier section 122, which ramp can be adjustable to a desired height depending on the height of the water, for instance. The mechanical docking members have the task of preventing transverse, vertical and longitudinal movement of the ferry and the pier to each other.

Figure 2 shows the ferry of Figure 1 being docked to the pier. It can be seen that the docking protrusion 102 has been penetrated to the receptacle 126 in the floating pier section. The claw 106A in the loading ramp 106 has been placed behind a vertical support in the pier section such that the mutual longitudinal movement of the ferry 100 and the floating pier section 124 is prevented.

Figures 1 and 2 have illustrated the mechanical docking members but have not shown the electric connecting members, which will now been highlighted with reference to Figure 3.

Figure 3 shows the docking horn 102 of the ferry 100, and the receptacle 126 for receiving the horn. Furthermore, the ferry comprises an electric connecting member 130 to be connected with an electric connecting member 140 of the pier 124. Preferably the electric connecting members are arranged due to safety reasons vertically higher than the mechanical connecting members 102, 126. The positioning of the electric connection members are arranged by the respective vertical supports 132, 142 of the ferry and the pier. In horizontal longitudinal direction of the ferry, the mechanical and electric connecting members may extend substantially equally far from the vessel. Transversely, the electric connection members may be positioned close to each other on one side of the ferry, or alternatively to opposite ends of the end face.

The connecting of the mechanic and electric connecting members may be arranged such that they connect substantially simultaneously. However, it may be provided such that the mechanic connecting members have completed the mechanic connection when the electric connection is made. In this way the ferry and pier have already been fixed from vertical/horizontal movement and thus the connectors of the electric connection are prevented from bending. In this way it is possible to start charging the vessel as soon as the alignment with the ramp is secured.

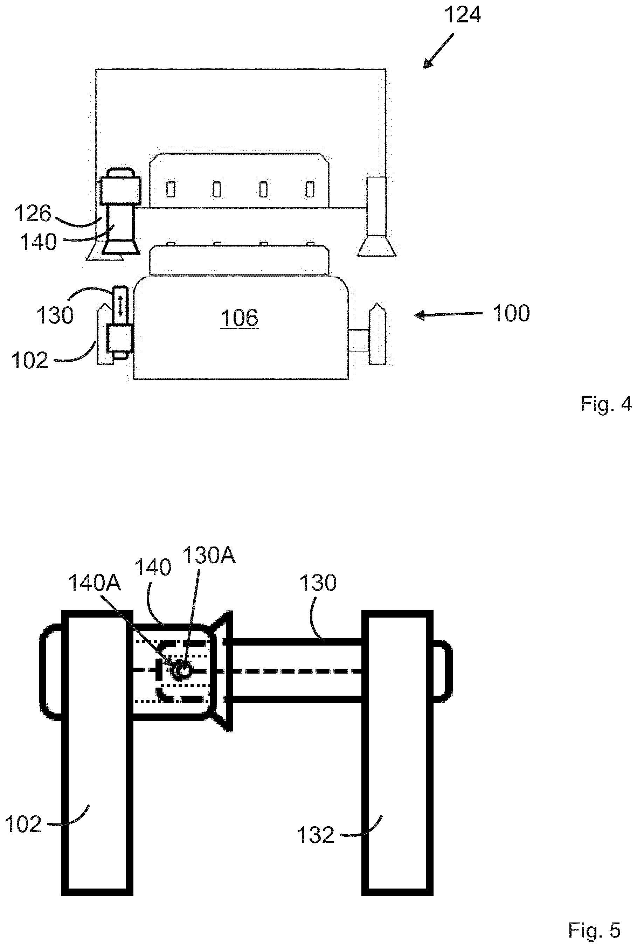

Figure 4 shows the ferry and the floating pier section from the top. In can be seen that mechanic docking members 102 of ferry may be arranged on the sides of the ferry in the proximity of the end, that is, the loading ramp 106 of the ferry when the ramp has been pivoted to a horizontal position. Alternatively, the mechanic connecting members may be on the deck of the ferry and arranged so that they extend from the longitudinal end face of the ferry.

The receptacle 126 in the floating pier section 124 may have a cone-like form for guiding the head of the docking horn 102 to the recess. The horn may correspondingly be formed as having an arrow-like shape when seen from the top.

Figure 4 also shows the electric connecting member 130 and 140. It can be seen that the mechanic and electric connecting means 102, 130 may be arranged substantially on top of each other, the side at an end of the ferry being the preferred position for the connecting members. However alternatively, the electric connecting members may be arranged to extend from the end face of the ferry.

The electric connection member 130 may be in the form of a bar and have its own actuator capable of moving the bar in longitudinal direction of the vessel. The actuator may comprise an electric motor, for instance, for moving the bar or corresponding support element carrying the electric contacts. During bad weather it may occur that one of the mechanical horns 102 sets properly but the other horn fails to set and moves back and forth. As a precondition for electric connecting it may be required that mechanic docking between the ferry and the pier is sufficiently stabile. If the ferry is provided with claws in the ramp, such as the claw 106A in Figure 1, it may be required that the claw has set to its docking position, which may be in a receptacle or behind a wall section. In a further embodiment, if the ferry is stabilized by using propulsion motors only, a prerequisite for the electric connecting may be that the mechanic horns 102 are in bottom and the captain decides to open the ramp.

When the above-mentioned preconditions for docking have been fulfilled, electric connection may be carried out. The electric connecting may occur automatically, that is the ferry has needed control logic and sensors for making the contact when the ferry's position has been mechanically secured and stabilized. In another embodiment, there may be provided a push button or some corresponding control member in the ferry's control bridge, for example, for initiating the electric connecting.

The electric connecting may be arranged by an electric actuator, which moves the electric contacts, which may be provided in the electric horn/bar 130 the very last distance when the docking has otherwise been completed. It may be provided that the actuator moves the horn 130 a few centimeters, for instance, to make the electric contact. This is illustrated by the two-headed arrow in Figure 4. Spring, pneumatic, or magnetic force may be used to keep the contacts together, allowing fast emergency disconnection if needed.

Figure 5 further highlights an embodiment of the electric connection. On the vessel side, there is provided an electric guiding member 130 to be connected to a receptacle 140 of the pier for receiving the guiding member 130. The guiding member 130 may be implemented in the form of a bar or horn, and the connecting member 140 in the form of a recess or receptacle for receiving the bar/horn. In some embodiments, there is no guiding member, such as receptacle, in the pier (or vessel) for guiding the electric contacts towards each other.

Arranged on the bar 130 there may be provided an electric connector 130A and in the receptacle 140 of the pier there may be provided a respective electric connector 140A to be connected with the electric connector 130A of the vessel. The electric connectors 130A, 140A on the vessel and the pier are galvanic connectors. They may be push-type connectors, for instance. In one embodiment, the connectors are convex connectors for allowing slight tilting of the connectors during docking of the vessel. In another embodiment, one of the connectors may have a convex form and the other one concave form. These embodiments provide the significant advantage that the contact surface is sufficiently large thus allowing transmission of large currents. In contrast to pin-type contacts, wearing of the contacts is avoided.

The electric connectors 130A and 140A of the vessel and pier are connected to respective cabling for delivering electricity from the pier to the vessel when the electric connectors are connected to each other.

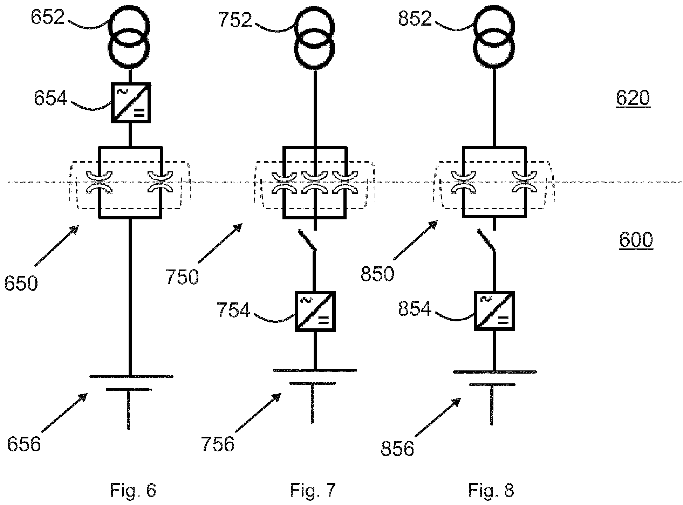

Figures 6 to 8 show some alternatives for the power transmission between the vessel 600 and the pier 620.

In Figure 6, there is provided a DC connection 650 consisting of one contact for positive and another contact for the negative pole such that one contact is on each side of the vessel or both contact are on same side. Figure 7 shows a 3-phase AC supply connection 750 and Figure 8 a 2- pole AC connection 850 for single phase. In all alternatives the contacts between shore and the vessel may be arranged to, under normal conditions, make or break at zero current in order to avoid sparking and to minimize wear of the contact surfaces. Emergency disconnection is still possible by simply pulling the ferry away from the pier.

Figures 6 to 8 show shore supply transformers 652, 752 and 852, respectively. The transformers may be arranged to stay below high voltage level, that is 1000 VAC or 1500 VDC, low voltage rules and safety procedures may be applied.

As the embodiments 6 to 8 show, the AC supply from ashore is rectified by the rectifiers 654, 754, 854 either on the pier 620 or onboard the vessel 600. Active rectifier or an additional circuit breaker onboard is arranged to control the current once the contacts are reliably closed. The energy flow is established right after closing the contacts and activating the rectifier or closing the onboard breaker. Operation with DC voltage is beneficial as no synchronization is required.

The energy is used for charging a DC storage onboard the vessel. The energy storage may be a DC battery bank 656, 756, 856 or a capacitor bank, for instance.

Disconnecting before departure proceeds in reverse order. First the circuit breaker is opened or active rectifier blocked. Contacts will release automatically as soon as the ship is pulled away from the pier.

Weather and dirt proof encapsulation may be is provided for the contacts on the vessel and pier. There may be provided automatic covers that protect the onboard and/or shore pins during transit.

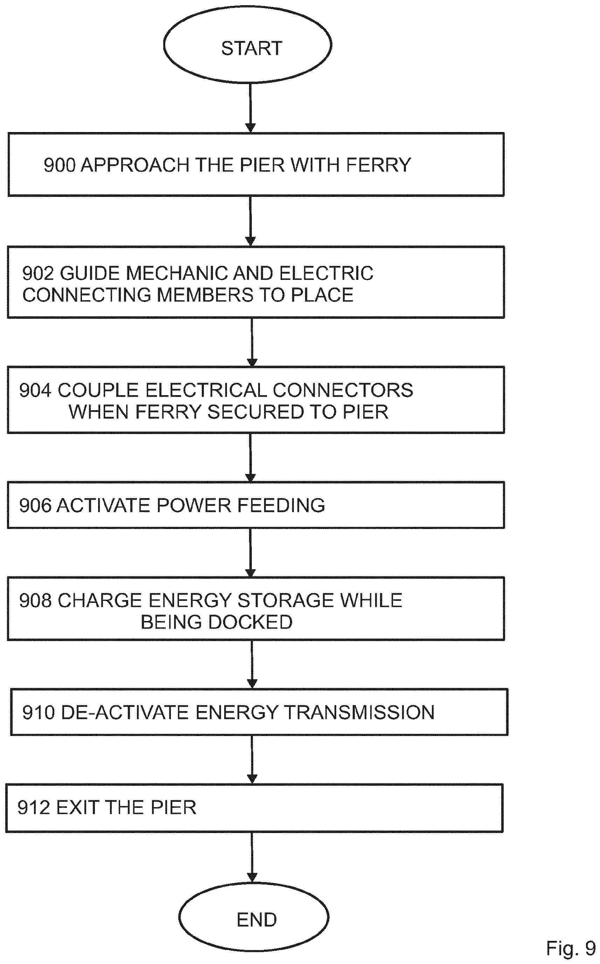

Figure 9 shows one embodiment of a method. The method relates to vessels, such as road commuter ferries, for instance. The vessel may be equipped with connecting equipment in one or both ends of the ferry for connecting the ferry to a pier.

In 900, the ferry approaches the pier. In 902, the mechanical docking members of the ferry are docked to their counterparts in the pier, preferably a floating or otherwise movable pier section. The mechanical docking may be carried out by one or more docking horns or arms in the vessel and respective receptacles in the pier or vice versa such that the horns or protrusions are provided in the pier and the receptacle or space for receiving the horn is provided in the vessel. Additionally, the vessel may be provided with locking members for ensuring that the vessel does not escape from the docking state.

The vessel also comprises electrical connecting members for connecting 904 the vessel electrically to the pier. In the embodiments, when the docking members of the vessel and the pier are implementing the docking, the electrical connector of the vessel and the pier are aligned to each other. This means that they are brought into proximity of each other and are preferably horizontally and vertically substantially in the same level. Thereby the contacts are connectable with a horizontal movement of the contacts of the vessel or the pier.

In one embodiment, the electrical connecting members may include a connecting arm to be received by a guiding member such as a receptacle in the pier. When the vessel approaches the pier, the mechanical connecting members secure 902 the vessel mechanically to the pier and the arm of the electric connection enters simultaneously the respective receptacle. That is, during the mechanical docking procedure when the mechanic bar of the vessel protrudes to the recess in the pier, also a connecting arm including the electric contact of the vessel enters the respective recess.

In one embodiment, the electric contact for starting the transmission is made automatically so that when the mechanical docking members are in place also the electric contact is made.

In another embodiment illustrated by step 904, when then mechanical docking members have completed the docking, that is the mechanic bar is as far in the recess as it can get, the electric contacts are still in a disconnected state and the electric contact has not been made. In this step, it may be ensured that the docking of the vessel is secure enough. This condition may be checked in a plurality of ways, such as checking the penetration depth of the mechanical docking horns to the receptacles, or by ensuring that the claws of the ramp have been fixed to the pier, for instance.

When the mechanical connection has been made and the vessel's docking has been secured and verified, an actuator of the electric connection member is actuated for making the electric connection. The actuator may move the electric contacts of the vessel or the pier so that the contacts of the vessel and the pier come into contact with each other. The contacts may be push type contacts, for instance. In addition to making the electric connection, the actuator may be also arranged to maintain the contact during docking of the vessel. In case of push type contacts, for instance, the actuator may provide the pushing force of the contacts against each other.

In another embodiment, the activation of the actuator may be controllable by an operator of the vessel. There may be provided a push button or similar control element, for instance, for activating the actuator and making the electric contact when the captain estimates that the docking is secure enough.

When also the electric connection between the vessel and the pier has been made according to 904, power transmission from the pier to the ferry may be activated according to 906. There may be provided a circuit breaker in the vessel and closing the circuit breaker initiates the power feeding from the pier. Alternatively, the operation of a rectifier, either on the shore or the vessel may be dependent on activation, and the power transmission may be initiated by the respective activation signal. The operation of these devices may be operatively coupled to the operation of the actuator, for instance. In one exemplary embodiment, when the actuator has physically brought the electric contacts into contact, it may cause operation of closing the circuit breaker and vice versa when the vessel is leaving the pier.

In 908, energy storage of the vessel is charged when the vessel is being docked to the pier. The energy storage may be a battery or capacitor bank. Additionally, some of the energy may be used for other purposes onboard in the vessel during docking of the vessel, such as for heating or auxiliary devices, for instance.

In 910, when the vessel has been unloaded/loaded with vehicles, for instance, and is ready to exit the pier, the power transmission is deactivated. This may be done by means of an inverse operation to step 906, that is deactivating a rectifier or by opening a circuit breaker.

When the power transmission from the pier has been prevented, the vessel may exit the pier. In this step, the actuator may move the electric pins from contacting the contact elements of the pier. When that has been finished, the vessel may move away from the pier when the mechanic and electric arms of the vessel exit the receptacles of the pier.

Although the exemplary embodiments shown in the figures illustrate that the actuator for moving the electric contacts is provided in the vessel, it may be alternatively arranged that the actuator is arranged to the pier or both in the vessel and the pier.

It will be obvious to a person skilled in the art that, as the technology advances, the inventive concept can be implemented in various ways. The invention and its embodiments are not limited to the examples described above but may vary within the scope of the claims.

## Claims

1. A docking arrangement for docking a vessel to a pier, comprising docking members (102, 126) for mechanical docking of the vessel to the pier (120), and electric connectors (130A, 140A) for transmission of electric energy during docking of the vessel (100) to the pier (120), wherein the electric connectors (130A, 140A) of the vessel and the pier are positioned such that they align to each other during mechanical docking of the vessel to the pier, **characterized in that** the mechanical and electric connecting members extend in horizontal longitudinal direction of the vessel.

2. A docking arrangement according to claim 1, **characterized in that** the docking members (102, 120) and electric connectors (130A, 140A) are arranged such that when the vessel (100) has been mechanically docked by the docking members (102, 120), the electric connectors (130A, 140A) of the vessel (100) and the pier (120) are in proximity to each other but an electric connection between the electric connectors has not been made.

3. A docking arrangement according to any preceding claim, **characterized in that** the electric connectors (130A, 140A) of the vessel (100) and pier (120) are aligned such that they are facing each other horizontally and vertically.

4. A docking arrangement according to any preceding claim, **characterized in that** the docking arrangement comprises guiding members (130, 140) for guiding the electric connectors (130A, 140A) of the vessel and pier towards each other during mechanical docking of the vessel to the pier.

5. A docking arrangement according to any preceding claim, **characterized in that** the docking arrangement comprises an actuator for moving the electric connectors (130A, 140A) of the vessel or the pier to connect and disconnect the connection of the electric connectors of the vessel (100) and the pier (120).

6. A docking arrangement according to any preceding claim, **characterized in that** the docking arrangement is arranged to verify that the docking of the vessel (100) to the pier (120) fulfils a predefined stability condition, and to activate the actuator automatically when it has been verified that the predefined stability condition has been fulfilled.

7. A docking arrangement according to any preceding claim, **characterized in that** the vessel (100) comprises a control member for actuating the actuator.

8. A docking arrangement according to any preceding claim, **characterized in that** the docking arrangement comprises locking members (106A, 128) for locking the docking of the vessel to the pier.

9. A docking arrangement according to any preceding claim, **characterized in that** the vessel comprises energy storage (656, 756, 856), and the electric connection is applied during docking for charging the energy storage on the vessel.

10. A docking arrangement according to any preceding claim, **characterized in that** the electric connectors (130A, 140A) comprise push connectors for making a push type galvanic connection between the vessel and the pier.

11. A docking arrangement according to any preceding claim, **characterized in that** the vessel (100) is a road commuting ferry.

12. A docking arrangement according to any preceding claim, **characterized in that** the pier (120) comprises a floating pier section (124) comprising the docking members (126) and electric connecting members (140A) of the pier.

13. A method, comprising:
approaching a pier with a vessel;
connecting (902) a mechanical docking member of the vessel to a mechanical docking member of the pier;
aligning (902), simultaneously while making the mechanical docking, electric connecting members of the vessel and pier to each other **characterized by** the mechanical and electric connecting members extend in horizontal longitudinal direction of the vessel.

14. A method according to claim 13, **characterized by**:
verifying (904) that docking of the vessel to the pier is stabile;
making (904) an electric contact between the vessel and the pier when the docking between the vessel and the pier has been verified.

15. A method according to claim 14, **characterized in that** the vessel and/or the pier comprises an actuator for moving the electric contacts of the vessel and/or the pier to automatically make the electric contact when the docking of the vessel has been verified.

## Patentansprüche

1. Eine Andockvorrichtung zum Andocken eines Schiffs an der Mole, die Vorrichtung aufweist Andockelementen (120, 126) zum mechanischen Andocken des Schiffs an der Mole (120) sowie elektrische Anschlüsse (130A, 140A) für die Übertragung von elektrischer Energie während des Andockens des Schiffs (100) an der Mole (120), wobei die elektrischen Anschlüsse (130A, 140A) von Schiff und Mole derart angebracht sind, dass sie während des mechanischen Andockens des Schiffs an der Mole ausfluchten, **dadurch gekennzeichnet, dass** die mechanischen und elektrischen Bauteile sich horizontal in Längsrichtung des Schiffs erstrecken.

2. Eine Andockvorrichtung gemäß dem Patentanspruch 1 **dadurch gekennzeichnet, dass** die Andockteile (102, 120) und die elektrischen Anschlüsse (130A, 140A) derart angeordnet sind, dass sich bei einem mechanischen Andocken über die Andockteile (102, 120) die elektrischen Anschlüsse (130A, 140A) des Schiffs (100) und die Mole (120) nahe beieinander befinden, aber kein elektrischer Kontakt besteht.

3. Eine Andockvorrichtung nach einem der vorgehenden Ansprüche **dadurch gekennzeichnet, dass** die elektrischen Anschlüsse (130A, 140A) des Schiffs (100) und die Mole (120) derart ausgerichtet sind, dass sie einander horizontal und vertikal gegenüber liegen.

4. Eine Andockvorrichtung nach einem der vorgehenden Ansprüche **dadurch gekennzeichnet, dass** diese Andockvorrichtung Führungsschienen (130, 140) für die Führung der elektrischen Anschlüsse (130A, 140A) von Schiff und Mole zueinander während des mechanischen Andockens des Schiffs an der Mole enthält.

5. Eine Andockvorrichtung nach einem der vorgehenden Ansprüche **dadurch gekennzeichnet, dass** diese Vorrichtung einen Stellantrieb für die Steuerung der elektrischen Anschlüsse (130A, 140A) am Schiff und an der Mole enthält, um die Verbindung zwischen den elektrischen Anschlüssen am Schiff (100) und an der Mole (120) zu unterbrechen und herzustellen.

6. Eine Andockvorrichtung nach einem der vorgehenden Ansprüche **dadurch gekennzeichnet, dass** diese Andockvorrichtung derart ausgelegt ist, dass geprüft wird, ob beim Andocken des Schiffs (100) an der Mole (120) eine vorher festgelegte Stabilitätsbedingung erfüllt wird und dass der Stellantrieb automatisch betätigt wird, wenn geprüft wurde, ob die vorher festgelegte Stabilitätsbedingung erfüllt wurde.

7. Eine Andockvorrichtung nach einem der vorgehenden Ansprüche **dadurch gekennzeichnet, dass** das Schiff (100) ein Kontrollsystem für die Betätigung des Stellantriebs besitzt.

8. Eine Andockvorrichtung nach einem der vorgehenden Ansprüche **dadurch gekennzeichnet, dass** diese Andockvorrichtung Blockierelemente (106A, 128) für eine Arretierung des Andockens des Schiffs an der Mole enthält.

9. Eine Andockvorrichtung nach einem der vorgehenden Ansprüche **dadurch gekennzeichnet, dass** das Schiff einen Energiespeicher (656, 756, 856) enthält und die elektrische Verbindung für den Ladevorgang des Energiespeichers des Schiffs während des Andockens hergestellt wird.

10. Eine Andockvorrichtung nach einem der vorgehenden Ansprüche **dadurch gekennzeichnet, dass** die elektrischen Anschlüsse (130A, 140A) Verbindungsstücke enthalten, um eine galvanische Verbindung des Push-Typs zwischen Schiff und Mole herzustellen.

11. Eine Andockvorrichtung nach einem der vorgehenden Ansprüche **dadurch gekennzeichnet, dass** es sich bei dem Schiff (100) um eine pendelnde Autofähre handelt.

12. Eine Andockvorrichtung nach einem der vorgehenden Ansprüche **dadurch gekennzeichnet, dass** die Mole (120) mit einem schwimmenden Molenstück (124) versehen wird, das mit Andockelementen (126) und Elementen für elektrischen Anschlüsse (140A) an der Mole ausgestattet ist.

13. Ein Verfahren, umfassend:
der Annäherung des Schiffes an die Mole;
der Verbindung (902) des mechanischen Andockelements des Schiffs mit einem mechanischen Andockelement der Mole;
der gleichzeitigen Ausfluchtung (902) von mechanischen Andockelementen, elektrischen Anschlüssen des Schiffs und der Mole miteinander, was **dadurch gekennzeichnet ist, dass** die mechanischen und elektrischen Verbindungselemente sich in horizontal in Längsrichtung erstrecken.

14. Ein Verfahren nach der Anspruch 13, **dadurch gekennzeichnet, dass**:
überprüft wird (904), ob die Andockung des Schiffs an der Mole stabil ist;
nach der Andockung zwischen Schiff und Mole ein elektrischer Kontakt zwischen dem Schiff und der Mole hergestellt wird (904).

15. Ein Verfahren nach der Anspruch 14, **dadurch gekennzeichnet, dass** Schiff und/oder Mole einen Stellantrieb für die Steuerung der elektrischen Anschlüsse des Schiffs und/oder der Mole befassen, um nach der Andockung zwischen Schiff und Mole automatisch eine elektrische Verbindung herzustellen.

## Revendications

1. Un mécanisme d'amarrage pour amarrer un navire à un quai, comprenant des éléments d'amarrage (102, 126) pour amarrer mécaniquement le navire au quai (120), et des connecteurs électriques (130 A, 140 A) pour transmettre de l'énergie électrique pendant l'amarrage du navire (100) au quai (120), dans lequel les connecteurs électriques (130 A, 140 A) du navire et du quai sont placés de façon à s'aligner l'un par rapport à l'autre au quai pendant l'amarrage mécanique du navire au quai, **caractérisé par le fait que** les éléments se connectant mécaniquement et électriquement s'étendent dans la direction horizontale longitudinale du navire.

2. Un mécanisme d'amarrage selon la revendication 1, **caractérisé par le fait que** les éléments d'amarrage (102, 120) et les connecteurs électriques (130 A, 140 A) sont disposés de telle sorte que lorsque le navire (100) a été amarré mécaniquement par les éléments d'amarrage (102, 120), les connecteurs électriques (130 A, 140 A) du navire (100) et le quai (120) étaient à proximité les uns des autres mais qu'une connexion électrique entre les connecteurs électriques n'a pas été établie.

3. Un mécanisme d'amarrage selon toute revendication précédente, **caractérisé par le fait que** les connecteurs électriques (130 A, 140 A) du navire (100) et du quai (120) sont alignés de manière à se faire face horizontalement et verticalement.

4. Un mécanisme d'amarrage selon toute revendication précédente, **caractérisé par le fait que** le mécanisme d'amarrage comprend des éléments de guidage (130, 140) pour guider les connecteurs électriques (130 A, 140 A) du navire et du quai l'un vers l'autre pendant l'amarrage mécanique du navire au quai.

5. Un mécanisme d'amarrage selon toute revendication précédente, **caractérisé par le fait que** le mécanisme d'amarrage comprend un actionneur pour déplacer les connecteurs électriques (130 A, 140 A) du navire ou du quai pour brancher et débrancher la connexion des connecteurs électriques du navire (100) et du quai (120).

6. Un mécanisme d'amarrage selon toute revendication précédente, **caractérisé par le fait que** le mécanisme d'amarrage est agencé pour vérifier que l'amarrage du navire (100) au quai (120) remplit une condition de stabilité prédéfinie, et pour activer automatiquement l'actionneur une fois qu'il a été vérifié que la condition de stabilité prédéfinie est respectée.

7. Un mécanisme d'amarrage selon toute revendication précédente, **caractérisé par le fait que** le navire (100) comprend un élément de commande pour actionner l'actionneur.

8. Un dispositif d'amarrage selon toute revendication précédente, **caractérisé par le fait que** le dispositif d'amarrage comprend des éléments de verrouillage (160 A, 128) pour verrouiller l'amarrage du navire au quai.

9. Un dispositif d'amarrage selon toute revendication précédente, **caractérisé par le fait que** le navire comprend un stockage d'énergie (656, 756, 856), et que la connexion électrique est établie pendant l'amarrage pour charger le stockage d'énergie du navire.

10. Un dispositif d'amarrage selon toute revendication précédente, **caractérisé par le fait que** les connecteurs électriques (130 A, 140 A) comprennent des connecteurs push pour réaliser une connexion galvanique de type push entre le navire et le quai.

11. Un mécanisme d'amarrage selon toute revendication précédente, **caractérisé par le fait que** le navire (100) est un ferrie-navette routier.

12. Un dispositif d'amarrage selon toute revendication précédente, **caractérisé par le fait que** le quai (120) comprend une section flottante (124) contenant les éléments d'amarrage (126) et les éléments de connexion électrique (140 A) du quai.

13. Une méthode comprenant :
l'approche d'un quai avec un navire,
la connexion (902) d'un élément d'amarrage mécanique du navire à un élément d'amarrage mécanique du quai,
l'alignement (902), simultanément à l'amarrage mécanique, des éléments de connexion électrique du navire et du quai l'un à l'autre, **caractérisé par le fait que** les éléments de connexion mécanique et électrique s'étendent dans la direction longitudinale horizontale du navire.

14. Une méthode selon la revendication 13, **caractérisée par** :
la vérification (904) que l'amarrage du navire au quai est stable,
l'établissement (904) d'un contact électrique entre le navire et le quai lorsque l'amarrage entre le navire et le quai a été vérifié.

15. Une méthode selon la revendication 14, **caractérisée par le fait que** le navire et/ou le quai comprend un actionneur pour déplacer les contacts électriques du navire et/ou du quai pour établir automatiquement le contact électrique lorsque l'amarrage du navire a été vérifié.
